Europäisches Patentamt

European Patent Office

Office européen des brevets

(11) Publication number: **0 037 718**
**A2**

(12) **EUROPEAN PATENT APPLICATION**

(21) Application number: **81301444.6**

(22) Date of filing: **02.04.81**

(51) Int. Cl.³: **B 23 B 13/12**
**B 23 B 13/08**

(30) Priority: **03.04.80 GB 8011237**
**22.10.80 US 199646**

(43) Date of publication of application:
**14.10.81 Bulletin 81/41**

(84) Designated Contracting States:
**AT BE CH DE FR IT LI NL SE**

(71) Applicant: **RIVAGE LIMITED**
**Pedmore Road Industrial Estate Pedmore Road**
**Brierley Hill West Midlands DY5 1TJ(GB)**

(72) Inventor: **Griffin, Don**
**29 School Road**
**Wombourne West Midlands(GB)**

(72) Inventor: **Griffin, Brian**
**1 Plantation Lane**
**Himley West Midlands(GB)**

(74) Representative: **Lomas, Geoffrey Michael et al,**
**BARKER, BRETTELL & DUNCAN 138 Hagley Road**
**Edgbaston**
**Birmingham B16 9PW(GB)**

(54) Bar stock holder.

(57) In order to reduce the noise associated with conventional bar stock holders the bar holding tube (1) is mounted in spaced bearings assemblies (2) to enable the tube (1) to rotate with the bar stock (16) projecting from the feed tube (19) of an automatic machine. In addition housing (4, 5) for the bearings are preferably interconnected by a tubular casing (7). In one construction, that of Figure 5, a single tubular member (7) provides the bearing housing for a series of axially spaced bearing assemblies which are spaced apart by sleeves (34). For a multi-spindle automatic machine, a series of bar holders may be supported by indexable carrier rings (33) to form a reel.

./...

EP 0 037 718 A2

FIG.1.

1

## BAR STOCK HOLDER

This invention relates to a bar stock holder for supporting a length of rotating bar stock which projects from a high speed screwing auto or similar machine which performs machining operations on the bar stock.

A conventional bar stock holder simply comprises a non-rotatable bar-holding tube supported on a stand adjacent to the auto machine. For a multi-spindle auto the bar stock holder often takes the form of a series of such tubes which are mounted in a reel arranged to rotate with the spindle-carrying head of the auto. However, in both cases, the bar stock rotates within the bar holding tube during the machining operations and this gives rise to a great deal of noise, and the corners of non-round bar stock may be damaged. In order to reduce the damage it is well known to insert polystyrene packing or springs into the bar holding tube but this is only partially effective.

The aim of our invention is to reduce the noise emitted by a bar stock holder in use.

According to the invention we provide a bar stock holder which comprises a bar holding tube mounted in bearings to enable it to rotate with the bar stock contained therein.

We are aware that it is common practice in an auto for a reciprocable feed tube to be arranged for rotation with the main collet, but our invention is not concerned with such a reciprocable feed tube which is usually of relatively short length. Our bar holder when used in conjunction with such a feed tube would be placed in front of the feed tube to support the length of bar stock which projects from the feed tube.

Preferably the bar holding tube is provided with means for lightly gripping non-round bar stock so as substantially to synchronise the speeds of rotation of the bar stock and bar holding tube. Thus in this arrangement the bar holding tube is rotatably driven by the bar stock.

Alternatively, additional drive means may be provided for the bar holding tube. The additional drive means preferably then comprises a flexible drive connecting the bar holding tube to the machine feed tube.

The gripping means preferably comprises a collar of a material chosen to suit the material of the bar stock. Examples of such materials are steel, brass and rubber, but other materials may be used.

In order further to reduce the noise emitted by the bar stock holder, the bearings in which the bar holding tube is rotatably mounted are each preferably housed within a respective housing which extends axially for a substantial distance in both directions from the bearing.

Preferably the bearing housings are connected by a tubular casing which is co-axial with the bar holding tube. Such a casing will perform the dual functions of restricting the amount of noise emitted and of protecting operators from contact with the rotating bar holding tube.

Since the bar holding tube rotates with the bar stock it can be made of reduced diameter as compared with conventional bar holding tubes, and the whipping of the bar stock can be reduced. This can lead to a reduction in the frequency of damage to the feed fingers of the auto.

In order to provide maximum support for heavy bar stock throughout its length a series of substantially equally spaced bearing assemblies may be provided along the bar holding tube, and the bearing assemblies are preferably supported within a bearing housing of substantially uniform cross-section throughout its length.

The invention will now be further described, by way of example only, with reference to the accompanying drawings, in which:-

Figure 1 is a side elevation of a bar-holder in accordance with the invention, with the left-hand portion shown in longitudinal cross-section.

Figure 2 is a perspective view of a bar holder similar to that of Figure 1, but incorporating an additional bearing assembly, mounted adjacent to a single spindle screwing machine;

Figure 3 is a longitudinal cross-sectional view of the additional bearing assembly of the holder of Figure 2;

Figure 4 is a perspective view of a series of bar holders similar to those of Figure 2, mounted in a reel assembly associated with a multi-spindle machine; and

Figure 5 is view similar to Figure 1 but of a modification.

4

A bar holding tube 1 is rotatably mounted adjacent to its opposite ends in ball bearing assemblies 2. Only the rear end of the device will be described since the front end is of identical construction. The bearing assemblies 2 are located in a generally cylindrical bearing housing 3 comprising threadedly connected portions 4 and 5 which are locked together by an internally threaded locking ring 6. The portions 5 at the opposite ends of the device are rigidly connected by a stationary tubular casing 7 which is co-axial with the rotatable bar holding tube 1. The casing 7 at its opposite ends 8 is externally threaded for engagement with internal threads 9 provided in portion 5 and is locked to portion 5 by a locking ring 10.

The bar holding tube 1 is provided with external threads 11 at its rear end to receive a pair of locked nuts 12 which abut bearing 2 to provide axial location of tube 1, and an internally threaded tubular retainer 13 for a gripper sleeve 14. Sleeve 14 is provided at its outer end with an external radial flange 15 which is clamped against the free end of tube 1 by a radially inwardly directed flange 13' on the outer end of retainer 13. Sleeve 14 is preferably made of steel for use with non-round bar stock and rubber for round bar stock.

Sleeve 14 has a circular bore but is sufficiently resilient to deform and grip hexagonal or square-section bar stock 16 so that the tube 1 is rotated by the bar stock 1. Since each bearing assembly 3 incorporates a gripper sleeve 14 the bar stock 16 is supported at both ends, and since the tube 1 is of relatively small diameter the bar stock cannot deflect by any substantial amount between the gripper sleeves 14.

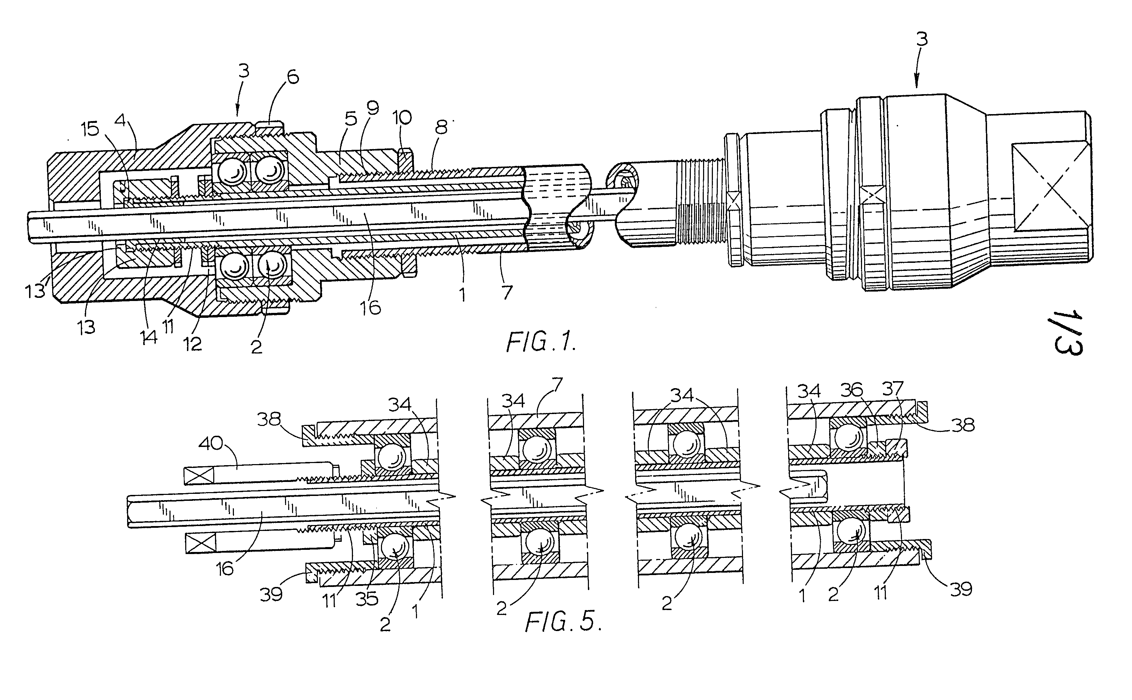

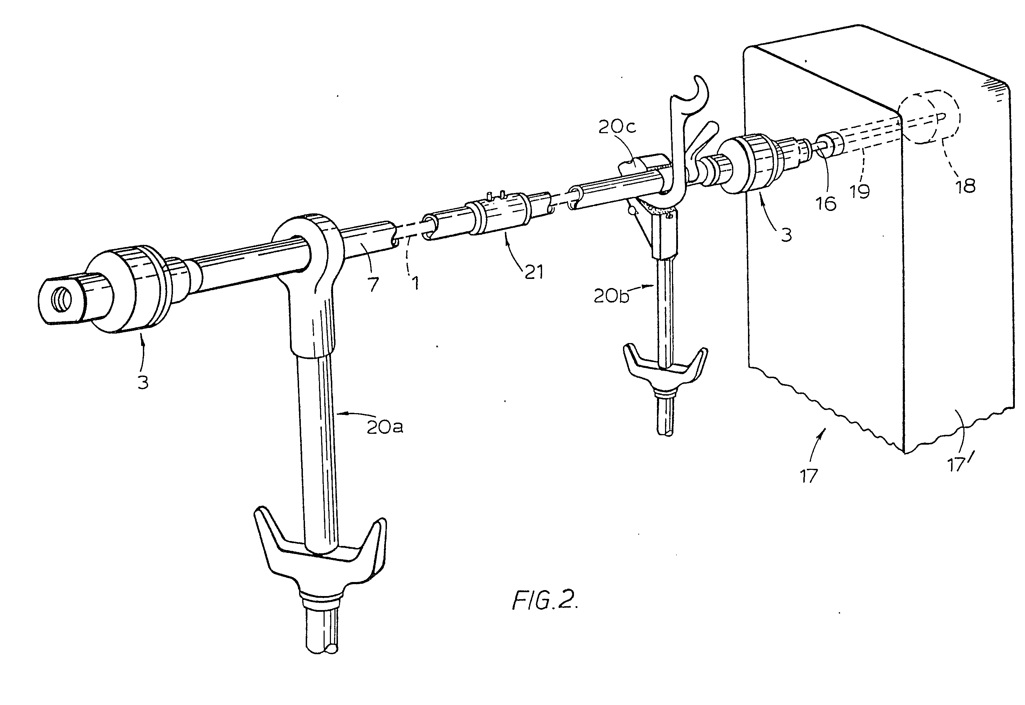

Figure 2 shows a bar-holder similar to that of Figure 1 mounted in conjunction with a single spindle auto screwing machine 17 provided with a conventional main collet 18 and feed tube assembly 19 located substantially within machine casing 17'. The assembly 19 comprises reciprocable feed fingers, not shown. The bar holder casing 7 adjacent to its opposite ends is supported by conventional pedastals 20a and 20b, the pedastal 20b being clamped to casing 7 by clamp 20c. It will be appreciated that the bar holder is axially aligned with the feed tube assembly 19 so that the bar stock 16 has a free passage from the bar holding tube 1 to the feed tube assembly 19. The holder of Figure 2 differs from that of Figure 1 in the provision of a central bearing assembly 21 which resists flexing of the bar-holding tube, and thus of the bar stock against flexing to reduce the friction forces resisting rotation of the bar stock, and hence the noise.

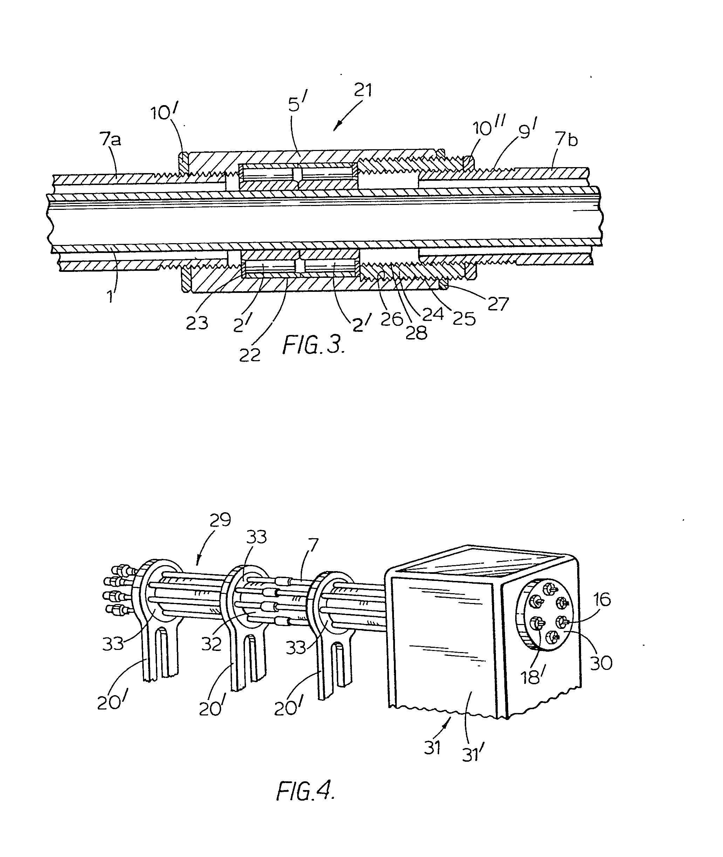

The central bearing assembly 21 of the holder of Figure 2 is shown in Figure 3. A tubular bearing housing 5' is internally threaded at its left-hand end for threaded engagement with one length 7a of a split casing 7, and a locking ring 10' is provided similar to ring 10 for this engagement. Two plain roller races 2' are housed in an enlarged portion 22 of the bore of housing 5' and are axially retained against a step 23 by an internally and externally threaded retaining sleeve 24. The external threads 25 of sleeve 24 are engaged with internal threads 26 provided in housing 5', and with a locking ring 27, and internal threads 28 are engaged with external threads 9' on the end of casing portion 76, a locking ring 10" being provided for this engagement. Since the casing portions 7a and 7b are of a substantial thickness and of a larger diameter than tube 1, they provide good support against flexing of the tube 1.

Referring now to Figure 4, six of the bar holders of Figure 2 are shown mounted in a reel assembly 29 which is arranged in conventional manner for rotation with the indexing head 30 of a multi-spindle screwing auto machine 31. A central shaft 32 of the reel assembly 29 is connected in conventional manner to the indexing head 30 for indexing therewith, and rigidly carries three spaced annular plates 33 which are journalled for rotation in the respective pedastals 20'. Each reel plate 23 is provided with six circumferentially equally spaced apertures in which are clamped the respective casings 7 of six bar holder assemblies which are axially alinged with respective spindles 18' carried by head 30. It will be appreciated that each spindle 18' is backed by a respective feed tube assembly, not shown, located in machine casing 31'.

Figure 5 is a cross-sectional partial view of a modification of the bar-holder of Figure 1, and corresponding parts have been given corresponding reference numerals. In this construction the bar holding tube 1 is rotatably supported within a non-rotatable tubular housing 7 by eight ball bearing assemblies 2, only four being shown in the drawing. The bearing assemblies 2 are equally spaced apart in the axial direction by seven spacer sleeves 34 which each extend from the radially inner race of one bearing assembly to the inner race of the adjacent bearing assembly and are a sliding fit on the rotatable tube 1. The bearing assemblies 2 and sleeves 34 are retained in position by internally threaded abutment rings 35, 36 threadedly engaged with the opposite ends 11 of tube 1, a locking ring 37 being provided for the ring 36. Housing 7 is internally threaded at its ends and threadedly receives tubular collars 38 which abut at their inner ends with the outer race of the end bearing assemblies and are provided at their outer ends with hexagon heads 29.

The manner in which the bearing assemblies 2 are located and retained in the housing 7 provides a less costly construction as compared with that of Figure 2, and since the rotatable tube 1 is supported by a series of spaced bearing assemblies it is capable of supporting heavy bar stock without flexing.

In the construction of Figure 5 the tube 1 is not rotated in use by the bar stock, but instead a flexible coupling 40 connects the front end of the tube 1 to the rear end of the feed tube, not shown, of the automatic machine. The flexible coupling may be of any convenient type which permits a small amount of axial misalignment between the bar holder and the feed tube of the automatic machine.

## CLAIMS

1. A bar stock holder adapted to support a length of bar stock (16) projecting from the casing (17') of a machine (17) provided with a rotating collet (18) which grips the bar stock during a machining operation thereon, the holder comprising a bar holding tube (1) for substantially enclosing the projecting length of bar stock and for rotation therewith, a support (3) adapted to support the tube in axial alignment with the collet, characterised by bearing means (2) arranged between the support (3) and the tube (1) to permit rotation relative to the support of the tube about the tube axis.

2. A bar stock holder as claimed in Claim 1, characterised by bar gripping means (13, 14) retained in the tube and adapted in use to synchronise the speeds of rotation of the tube and the bar stock.

3. A bar stock holder as claimed in Claim 2, characterised in that the gripping means comprises a collar (14) of resilient material.

4. A bar stock holder as claimed in any of the preceding claims characterised in that the support comprises a bearing housing (3) enclosing the bearing means, and a tubular casing (7) which is substantially coaxial with the tube and is continuous with the bearing housing.

5. A bar stock holder as claimed in Claim 4 characterised in that the bearing means comprises at least two axially spaced bearing assemblies (2), the bearing housing comprises respective housing portions (5), and the tubular casing (7) extends between and is continuous with the housing portions.

6.   A bar stock holder as claimed in Claim 4 or Claim 5 characterised in that the bearing means comprises at least three axially spaced bearing assemblies.

7.   A bar stock holder as claimed in Claim 4, or Claim 6 as appended to Claim 4, characterised in that a single tubular member (7 in Figure 5) constitutes the bearing housing and the tubular casing.

8.   A bar stock holder as claimed in Claim 7 as appended to Claim 6 characterised in that the bearing assemblies are axially spaced apart by sleeves (34) which fit over the bar holding tube.

9.   An automatic machine in combination with a bar stock holder in accordance with any of the preceding claims, characterised in that the machine (17) comprises a rotatable collet (18) adapted to grip bar stock (16) during a machining operation thereon, a machine casing (17'), a feed tube (19) within the casing and axially aligned with the collet for rotation therewith, and feed means associated with the feed tube and adapted to feed bar stock through the collet, the bar stock holder being arranged adjacent to the automatic machine with the bar holding tube (1) in axial alignment with the feed tube (19) and collet (18) to support a length of bar stock (16) which extends through the feed tube and collet and which projects from the feed tube.

10.   The combination of Claim 9 characterised in that the machine is an automatic multi-spindle machine comprising an indexable head (30), a plurality of circumferentially equally spaced rotatable collets (18') carried by the head, a respective feed tube axially aligned with each feed collet and indexable with the head, feed means for feeding bar stock through each feed tube, and in which there is a plurality of such bar stock holders each arranged with its bar support tube axially aligned with a respective feed tube, a common indexable support (33) supports the bearings of each of the bar stock holders, and comprising a drive connection (32) from the head to the indexable support to index the support with the head.

FIG.1.

FIG.5.

FIG.2.

3/3

FIG.3.

FIG.4.